# EUROPEAN PATENT APPLICATION

(11) **EP 1 722 559 A1**
(43) Date of publication of application: **15.11.2006**
(21) Application number: 05103933.7
(22) Date of filing: 11.05.2005
(51) Int. Cl.: H04N 5/64

(54) **Improved display device for indoor and outdoor applications**

(71) Applicant: Global display Solutions S.p.A., 36073 CORNEDO VICENTINO (Vicenza) (IT)
(72) Inventor: Ongaro, Andrea, 36076 RECOARO TERME (Vicenza) (IT)
(74) Representative: Coppo, Alessandro

(57) **Abstract**

An improved display device for indoor and outdoor applications comprising a front bezel (16) and a back housing (19), wherein the front bezel (16) includes a display screen and a protective panel (11, 13) having an inner face positioned at a prefixed distance in front of an outer face of the display screen and allowing the viewing of data on the display screen therethrough.

Each display device or cluster is composed out of base modules (10, 12) having predetermined dimensions of the screen, said base modules (10, 12) including master modules and slave modules.

## Description

The present invention refers to an improved display device for indoor and outdoor applications.

In particular, the invention relates to displays projected for station halls, tunnels, passageways and other applications, i.e. beneath the station roof, against the station facade, on the platform without any protection.

Said displays are totally sealed against rain and dust, though answering the most severe requirements of the norms IP65 or IP54.

The constructive philosophies that have been used during the development of the sizes of the display screen are substantially the same, however in the larger applications the cooling of the system is preferably obtained with the integration of a ventilated heat sink located directly on the back of the metal frame.

The functioning at low temperatures is granted by the use of an heater located directly on the back of the panel.

Display devices can be provided in many sizes and indeed shapes and can be put to many different uses.

In certain environments, typically where the displays are put to commercial and information use, the screens can be provided with protective panels, made from a suitable transparent material such as glass or acrylic, positioned in front of the display screen.

These panels serve to protect or minimise the screen from impact damage due to accidental contact and/or malicious damage due to vandalism.

In other embodiments, the monitor has a non glare, anti-vandal glass, that is assembled with a "bonding" technology that improves the readability of the image when the display is installed in front of strong lights sources and that eliminates the disturbing refractions due to the coupling between the panel and the anti-vandal glass.

However, problems still exist in the flexibility in order to obtain the desired presentation devices, particularly when the displays are projected for displaying information either for indoor applications (such as halls, tunnels and passageways of a station) and outdoor applications (such as the station roof, the station façade and/or the station's platforms).

Moreover, in case of outdoor applications, it is necessary that displays are totally sealed against rain and dust though answering the most severe requirements of the IP norms.

It also should be noted that reference hereon in to a display screen includes the provision of a touch screen panel, the main purpose of which is to act as a means for interaction with the screen rather than a purely protective function and the reference to a protective panel for display screens throughout the description is in a non-limiting manner.

The aim of the present invention is to provide an improved display device for indoor and outdoor applications of a type which allows the best flexibility in terms of composition of various types of modules to be coupled mechanically in order to obtain the desired presentation devices or clusters.

Another aim of the present invention is to provide an improved display device for indoor and outdoor applications of a type which allows an autonomous control of each module, so improving flexibility in adding new clusters that the customer could require.

A further aim of the present invention is to provide an improved display device for indoor and outdoor applications of a type which maintains or improves the resistance to damage of the display screen and also solves the problems caused by outside influences, such as temperature, dust, humidity, etc.

These aims according to the present invention are achieved by an improved display device for indoor and outdoor applications as claimed in claim 1.

In a first aspect of the invention, the monitor of the display device has a non-glare, anti-vandal glass that is assembled using a "bonding" technology that improves the readability of the images when the display is installed in front of strong lights sources.

Further advantages of this optical enhancement technology are the elimination of disturbing refractions due to the coupling between a TFT (Thin Film Transistor) panel and an anti-vandal glass.

In one embodiment, the clusters, or publication devices, are composed out of base modules and base modules can be master modules or slave modules.

A master module is equipped with one PC and one Ethernet interface, one display controller, one diagnostic board, the power supply and ventilators system, while a slave module is equipped with one display controller, one diagnostic board, the power supply and ventilators system.

Typically, the internal PC and the display controller (depending on the quantity of the used base modules) allow the download of information through the Ethernet. Depending on the configuration of the presentation devices, one or more video graphic cards can be added to the PC, thus allowing all display modules being controlled by one master display module in the presentation device.

In one embodiment every module is equipped with an ambient light sensor that adjusts automatically the brightness of the panel to the ambient conditions and provides an uniformity to the optical characteristics both during the day and night time.

Typically, this adjustment allows further more a remarkable reduction of the electrical power consumption during the night hours and it prolongs the average lifetime of back lights of the TFT panels.

In one embodiment inside the monitor and located in the display controller a diagnostic circuitry is installed that allows the diagnostic of the entire monitor and the control of the temperature.

This allows the use of the monitors in presence of extreme environmental conditions.

Typically, the diagnostic and the onboard PC permits the continuous monitoring of the status of the monitor from a remote post and it is possible in this way to obtain, via Ethernet, information on the complete system, such as thermal anomalies, state of the fans and of the heater, state of the display, ambient light and presence of shocks or vibrations.

In one embodiment for the communications inside the clusters (from each module to internal PC), a RS422 line is used.

In a further embodiment of the invention it is also implemented the upgrading possibility from remote post of the firmware of the display controller for a quick handling and implementation of further upgrades of the system.

Specific embodiments of the invention are now described with reference to the accompanying drawings, wherein:
- figure 1A shows a first perspective view of a first embodiment of a base module display device for indoor and outdoor applications according to the present invention;
- figure 1B shows a second perspective view of the base module display device of figure 1A;
- figure 2 schematically illustrates a front view of a second embodiment of a base module display device for indoor and outdoor applications in accordance with the present invention;
- figure 3 schematically shows a rear view of the base module display device for indoor and outdoor applications in accordance with the present invention;
- figure 4 schematically illustrates an example of cluster, which is formed by two base module display devices coupled mechanically in order to obtain the desired presentation device for indoor and outdoor applications;
- figure 5 schematically illustrates a lateral view of a base module display device for indoor and outdoor applications, showing a possible embodiment of an opening mechanical device;
- figures 6A and 6B illustrate partial sectional views of a base module display device for indoor and outdoor applications, showing specific profiles for opening and closing and disassembling the front bezel of the display device in accordance with the present invention in other embodiments;
- figure 7A schematically illustrates an exploded view of a base module display device for indoor and outdoor applications in accordance with the present invention;
- figure 7B schematically illustrates an internal layout of a base module display device for indoor and outdoor applications in accordance with the present invention;
- figure 7C schematically illustrates a sectional view of a base module display device for indoor and outdoor applications in accordance with the present invention;
- figure 7D shows a partial sectional view of a base module display device according to the present invention.

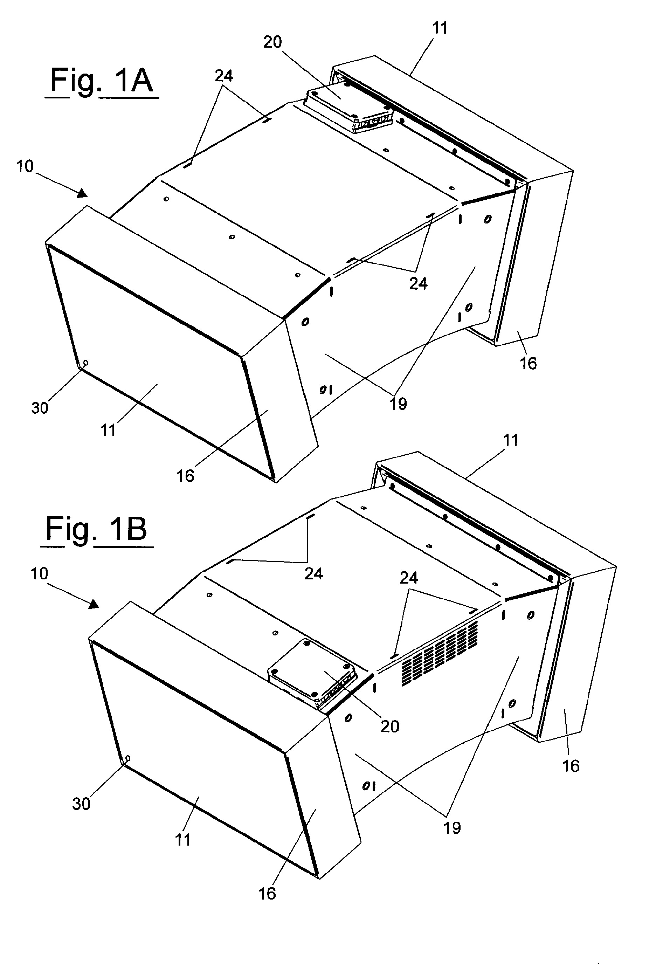

Referring firstly to figures 1A, 1B, 2 and 3, the proposed invention allows the best flexibility in terms of composition of various types of modules and it consists of the realization of base modules having different sizes and including master modules and slave modules, which can be coupled mechanically in order to obtain the desired presentation devices or clusters.

The clusters may be complete with clocks and light boxes.

The base module 10 for the embodiment of the metal frame of figures 1A and 1B contains two TFT (Thin Film Transistor) panels (one on the front side and the other on the back side) indicated with 11.

The metal frame is designed to use of the module in outdoor and indoor applications and it is IP54.

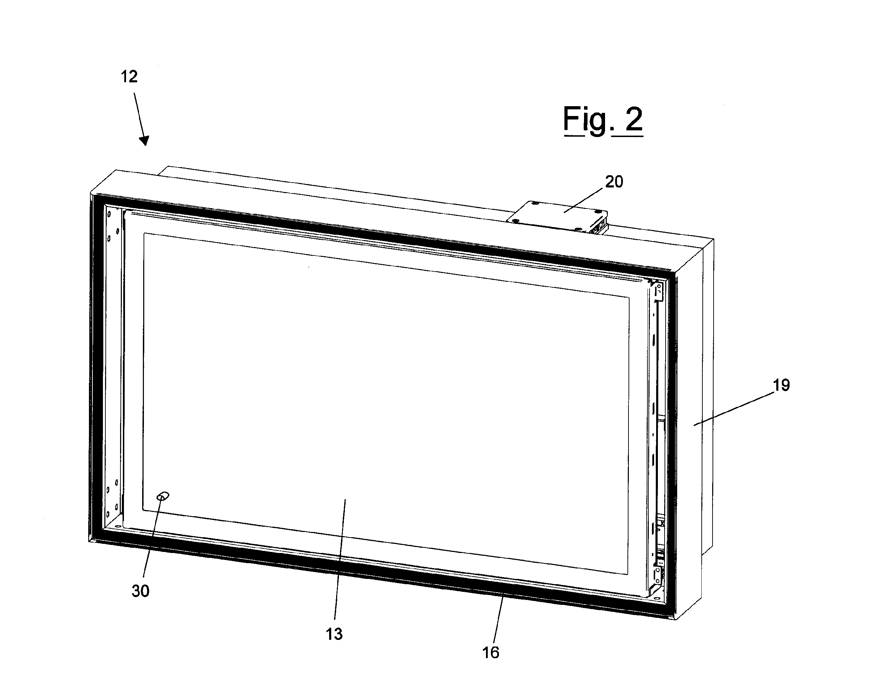

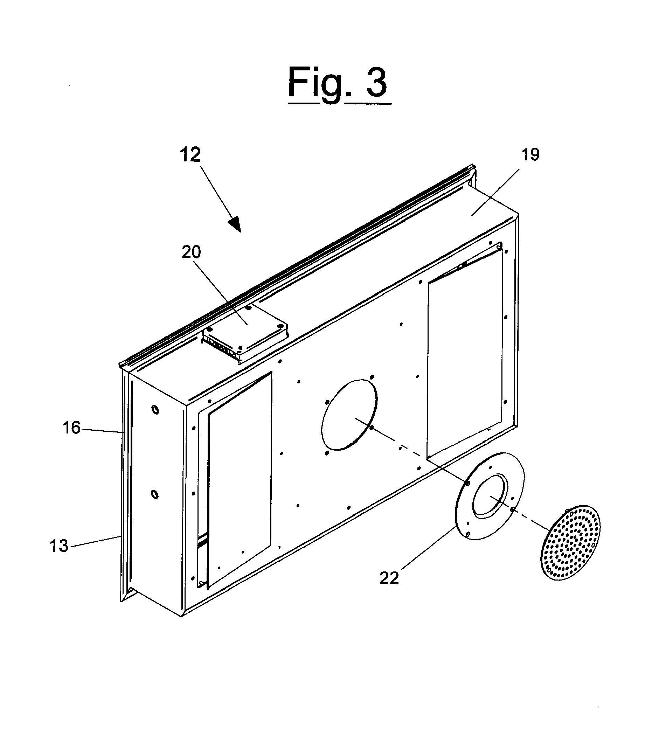

Each of the base modules 12 (figures 2 and 3) for other embodiments of the metal frames (having different and, in particular, larger sizes) contains one suitable panel 13 and the metal frames are designed for use of the modules 12 both for outdoor and indoor applications; the protected grade is IP65.

In one embodiment every module 10, 12 is equipped with an ambient light sensor 30 that adjusts automatically the brightness of the panel 11, 13 to the ambient conditions and provides an uniformity to the optical characteristics both during the day and night time.

Typically, this adjustment allows further more a remarkable reduction of the electrical power consumption during the night hours and it prolongs the average lifetime of back lights of the TFT panels 11, 13.

The assembly of the various clusters as requested by the customer can be obtained installing on the bracket realized for this purpose the various base modules 12 as per the requested configuration.

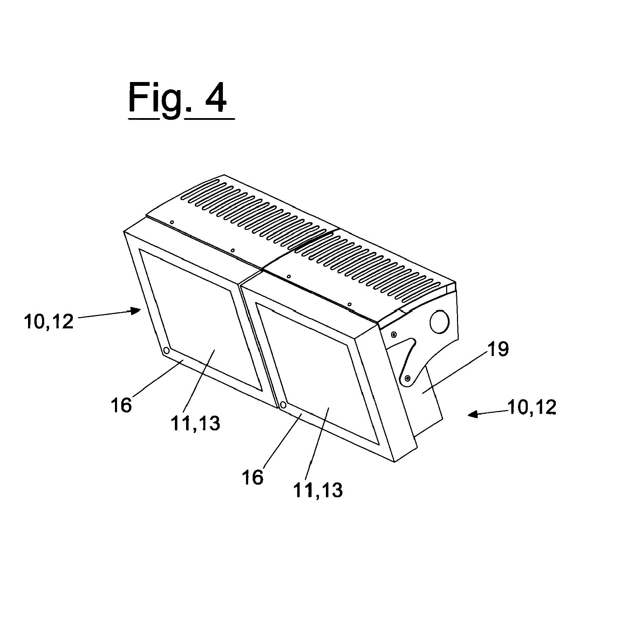

Figure 4 shows an example of an assembly of two base modules 10, 12.

The concept of using the base modules to realize the requested configuration allows to:
- autonomous control of each module;
- improved handling (move pallets of really small dimensions and weight);
- improved maintainability (make easy the operations of maintenance and service since the modules which have to be moved are small in size and weight);
- have a better and higher flexibility in adding new clusters that the customer could require.

The outer part of every base module 10 or 12 is made with extruded aluminium, while some internal pieces (such as box for PC, controller, etc.) are realized in aluminium and other pieces (such as brackets, supports, etc.) are made in stainless steel.

Every module 10, 12 has also its own opening system that allows to operate inside the monitor through the opening of the front part and it is accessible by service personnel as requested by the customer specifications.

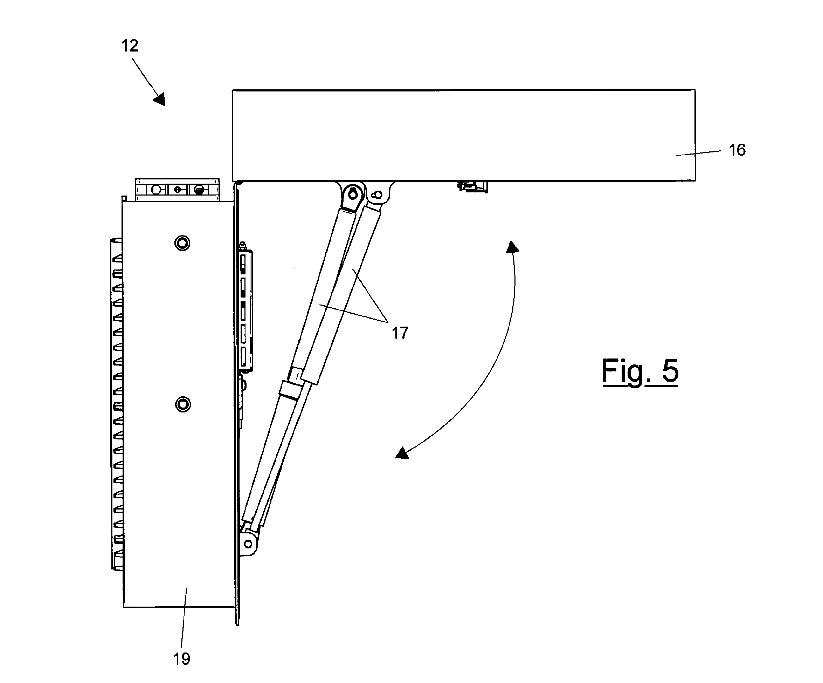

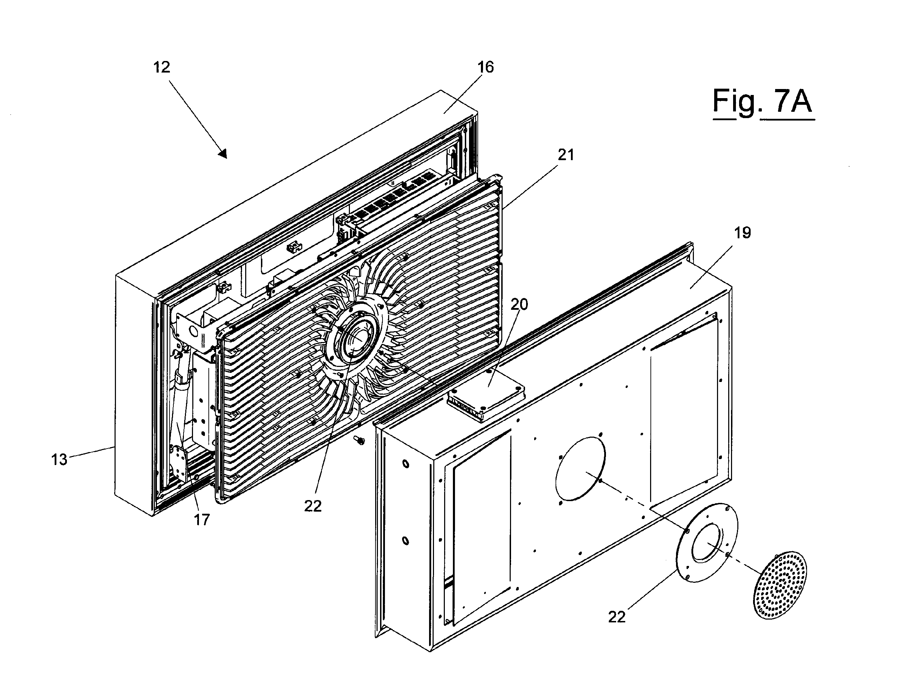

In particular, as shown in figure 5, the front bezel 16 is made out of an extruded aluminium and it has built in a non glare anti-vandal glass and the TFT panel 11, 13.

The closing of the module 10, 12 is by means of torque screws, which are located on the back, on the lower part of the module 10, 12.

Furthermore, the opening of the front bezel 16 is kept in its own position (once opened) through the use of an EMKA stop racket or gas springs 17 (as shown in figure 5) .

The opening of the front bezel 16 is obtained unscrewing the torque screws on the back of the module 10, 12 and the angle of the opening system can be increased up to 90°, still keeping the front bezel 16 removable.

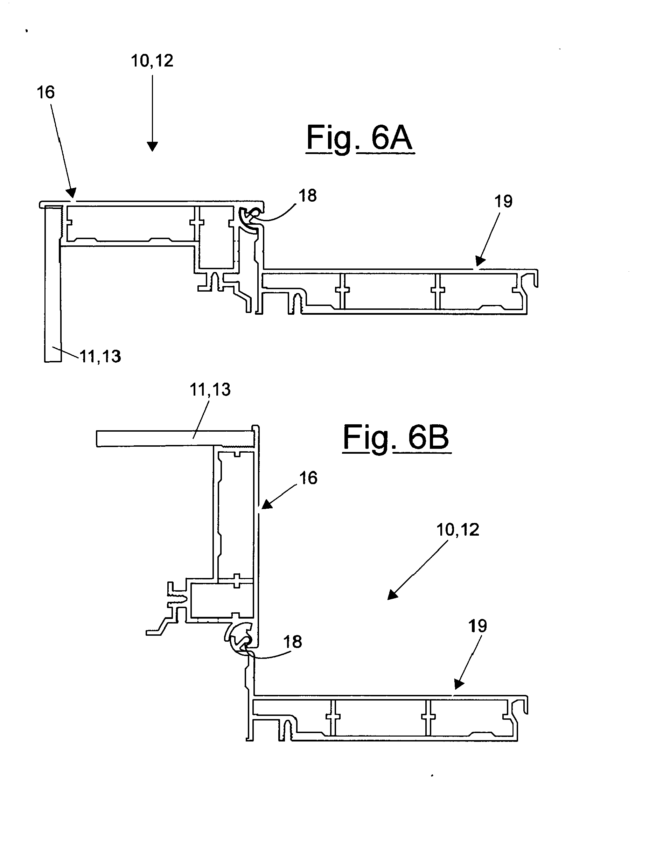

Figure 6A and 6B show suitable profiles of the display device according to the present invention, which permit to open the front bezel 16 up to 90°.

In particular, figure 6A schematically illustrate a profile drawing with the front bezel 16 closed and figure 6B schematically shows a profile drawing with the front bezel 16 opened up to 90° thanking to the action of the hinge 18.

Moreover, to connect the cables and taking into account the IP grade, a special box 20 is placed on the top of each module 10, 12, through which it is possible insert all cables, such as power suppliers, Ethernet or optics fibre, signal cables.

Equalization of pressure and humidity differences is also incorporated.

Finally, the cooling of the monitors without any air exchange between the inside and the outside of the module 10 can be realized by ventilation holes 24, provided on the top of the module 10 (figure 1A, 1B), and by an heat sink 21, which is provided at the back of the module 12, between the front bezel 16 and the back housing 19, and which includes a series of small wings 22 in the inner and outer part (figure 7A).

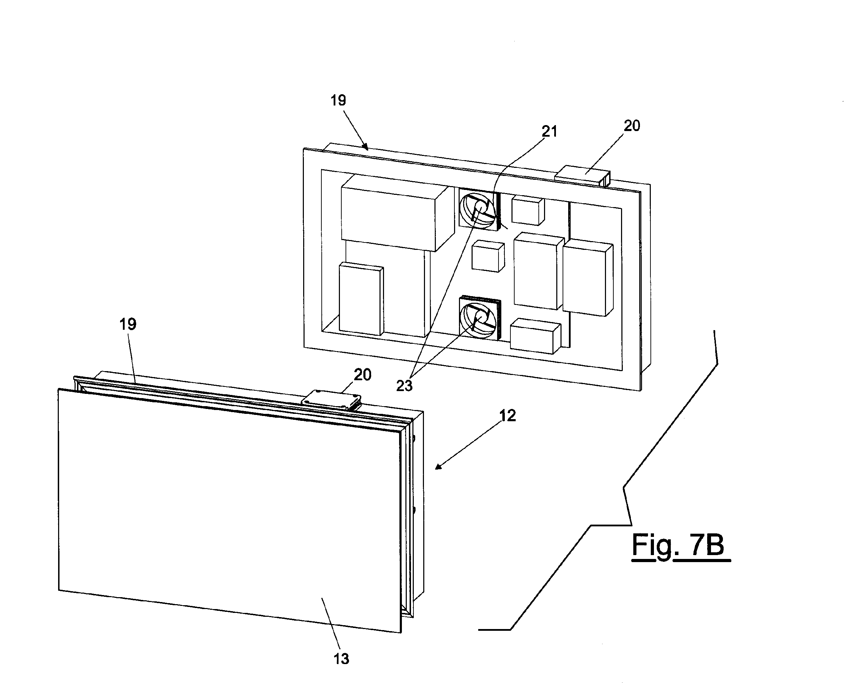

The efficiency of the heat sink 21 has been increased using a fan inserted directly in the back of the heat sink 21 itself, while in the inside the use of two fans 23 (redundant) is increasing the exchange of temperature between the various components and the same heat sink 21 (figure 7B).

In this case, there is no forced ventilation between the inside to the outside and this allows not to use air filters for the fans 23.

It also avoids the presence of dirt and dust inside the module 10, 12.

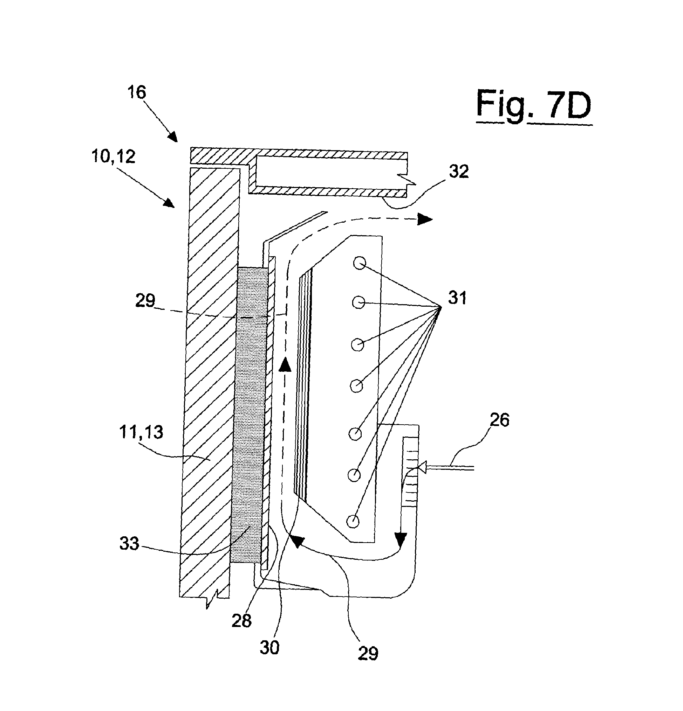

A further improved system for cooling the monitors is showed in detail in figure 7D.

In this case, the glass of the monitor 10, 12, which is coupled to the panel 11, 13, is ventilated from the back by means of a flow of air 26 flowing from the outside (figure 7D).

In this embodiment, a channel 28, in which the flow of forced air 29 flows, is provided between the back light filters 30 of the lamps 31 and the panel 11, 13, obtaining a cooling or ventilating duct, with the forced air flow 31 coming out from the outlet 32 for cooling the glass of the monitor module 10, 12.

Also, the closed mechanical development makes the module 10, 12 inaccessible by insect, thus providing an adequate protection for the equipment against outside influences (temperature, dust, humidity, etc.), as requested in the customer specifications and in the IP norms.

All the above is also decreasing the costs of maintenance.

IP norms level requirement has also been fulfilled by designing a completely isolated module 10, 12.

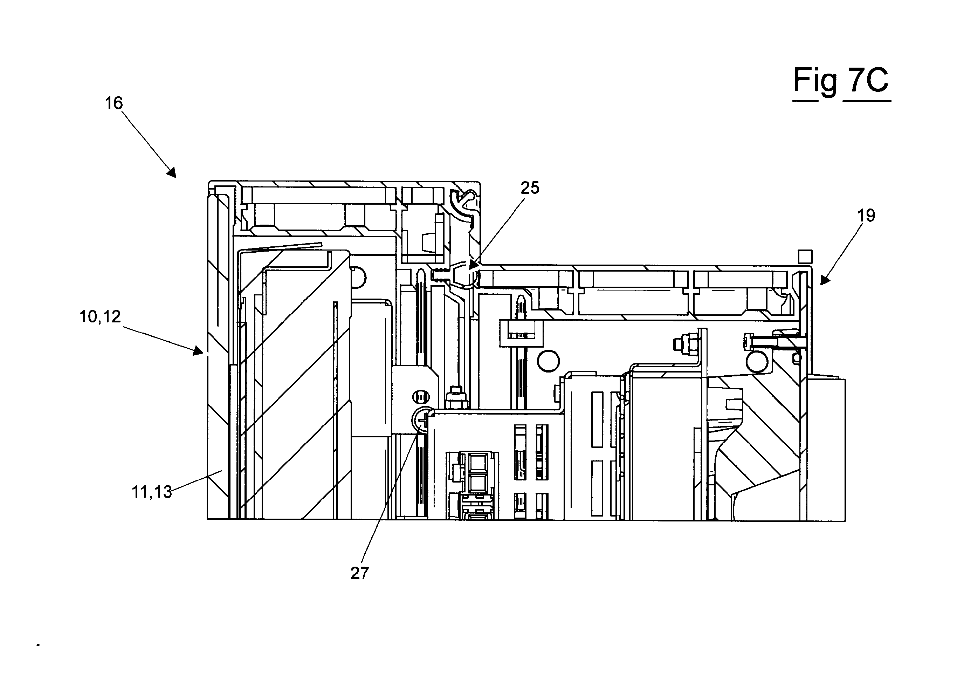

This is achieved by using special IP gaskets 25 all along the front opening profile, and also, to guarantee electrical continuity from the back housing 19 to the front bezel 16 (for CE conformity), a conductive EMI gasket 27 is added all long the same profile (see figure 7C).

Finally, for improving the resistance to damage of the display screen and also solving or minimising the problems caused by refraction, reflection and contrast, a layer of filler material 33 is provided between the inner face of the protective TFT panel 11, 13 and the display screen (figure 7D).

Said filler material 33 is substantially transparent to allow the material on the display screen to be viewed through the layer and the panel 11, 13.

In one embodiment the filler material 33 is an encapsulating material and preferably one which is stable upon exposure to UV light, such as an epoxy gel material, a clear soft gel epoxy encapsulant or an epoxy resin.

In one embodiment the filler material 33 is provided in an enclosed volume defined by the outer face of the display screen, the inner face of the protective panel 11, 13 and a bead or beads of material which form a gasket or gaskets which define the side wall.

Typically the gaskets are formed of a polymer material provided in a substantially linear path around the periphery of the protective panel 11, 13 and the display screen.

Typically the display screen is a flat screen with a surrounding metal frame.

Yet further, the display screen is typically an LCD display screen with a flexible face which is protected by the protective panel 11, 13 from damage.

The protective panel 11, 13 is preferably manufactured from any suitable material such as glass, acrylic or the like and may be provided for touch screen functionality.

In one embodiment the filler material 33 is introduced in a fluid state to fill the volume and subsequently cured and two linear beads of material are provided to form two gaskets.

In one embodiment the filler material 33 is introduced to fill the volume once the gasket material has cured and sealed the volume.

The filler material 33 is then injected through the gasket at one or a plurality of locations to introduce the filler material 33 into the volume and fill the same.

Typically, the injection is performed through an aperture formed by the injection means which, when the injection means have been removed, reseals due to the resilience of the frame material or additional material can be applied to the frame to seal the aperture, or the curing of the filler material 33 prevents leakage.

From the description given, the characteristics of the improved display device for indoor and outdoor applications, to which this invention refers, may be clearly seen, just as the advantages are clear.

Finally it is clear that numerous other variations, besides the ones already mentioned, may be made to the display device according to the present invention, without for this reason departing from the inherent principles of innovation of the inventive idea, and it is clear that, in the practical use of the invention, the functions, materials, forms and dimensions of the details illustrated may be whatever required and they may be replaced with others that are technically equivalent.

## Claims

1. Improved display device for indoor and outdoor applications of the type comprising at least one front bezel (16) and at least one back housing (19) , wherein the front bezel (16) includes a display screen and a protective panel (11, 13) having an inner face positioned at a prefixed distance in front of an outer face of the display screen and allowing the viewing of data on the display screen therethrough, **characterised in that** each display device or cluster is composed out of base modules (10, 12) having predetermined dimensions of the screen, said base modules (10, 12) including master modules and slave modules.

2. Improved display device as claimed in claim 1, **characterised in that** each master module is equipped with at least one PC and at least one Ethernet interface allowing the download of information through the Ethernet, at least one display controller, at least one diagnostic board, the power supply and ventilators system.

3. Improved display device as claimed in claim 1, **characterised in that** each slave module is equipped with at least one display controller, at least one diagnostic board, the power supply and ventilators system.

4. Improved display device as claimed in claim 1, **characterised in that** each of said base modules (10, 12) is equipped with an ambient light sensor (30) that adjusts automatically the brightness of the panel (11, 13) to the ambient conditions and provides an uniformity to the optical characteristics both during the day and night time.

5. Improved display device as claimed in claim 1, **characterised in that** each of said base modules (10, 12) has an opening system allowing to operate inside the display device through the opening of said front bezel (16), the opening of the front bezel (16) being kept in a prefixed position through the use of a stop racket or gas springs (17).

6. Improved display device as claimed in claim 1, **characterised in that** a special box (20) is placed on the top of each module (10, 12), through which it is possible insert all cables, such as power suppliers, Ethernet or optics fibre and signal cables.

7. Improved display device as claimed in claim 1, **characterised in that** each module (10, 12) is provided with ventilation holes (24), located on the top of the frame, and with an heat sink (21), located at the back of the module (10, 12), which includes a series of small wings (22), a first fan inserted directly in the back of the heat sink (21) and second fans (23) increasing the exchange of temperature.

8. Improved display device as claimed in claim 1, **characterised in that** the glass of said module (10, 12), which is coupled to said panel (11, 13), is ventilated from the back by means of a flow of air (26) flowing from the outside, a ventilating duct (28) being provided between the back light filters (30) of the lamps (31) of the module (10, 12) and said panel (11, 13), in which a flow of forced air (29) flows for cooling the glass.

9. Improved display device as claimed in claim 1, **characterised in that** each base module (10, 12) is completely isolated, by using special IP gaskets (25) all along the front opening profile, a conductive EMI gasket (27) being also added all long said opening profile to guarantee electrical continuity from the back housing (19) to the front bezel (16).
